# EUROPEAN PATENT APPLICATION

(11) **EP 1 146 287 A1**
(43) Date of publication of application: **17.10.2001**
(21) Application number: 00303082.2
(22) Date of filing: 12.04.2000
(51) Int. Cl.: F23J 15/04

(54) **An apparatus for processing soot and mist**

(71) Applicant: Hyodo, Masatoshi, Ama-gun, Aichi-ken (JP)
(72) Inventor: Owa, Hiroshi, Toukai-shi, Aichi-ken (JP)
(74) Representative: Beresford, Keith Denis Lewis

(57) **Abstract**

An apparatus for processing soot and mist, comprises a casing (10) having an inlet port (11) of soot or mist and an exhaust port of a processed air, a baffle plate (13) having a gap and arranged in the casing, a space (15) formed above the baffle plate, an induction plate (16) arranged above the space, and a blower (17) provided at the casing. Several baffle plates (13) are provided within the casing and the residence time of soot and mist is secured. Consequently the soot and the mist can be processed efficiently and refuse separated from the soot and the mist can be recovered in a mass. Generating of dioxin can be avoided.

## Description

### BACKGROUND OF THE INVENTION

### Field of the Invention

The present invention relates to an apparatus for processing soot and mist and a system of processing soot and mist using the apparatus.

### Prior Art

In the prior art, technology is disclosed in various aspects and many references (unexamined patent application) are filed regarding processing of soot (that produced, for example, from a combustion furnace, a combustion boiler or the like) and mist (including dust mist, paint mist, cotton mist or the like produced from a factory, facilities, various sorts of machines and apparatuses). Among them, several matters seem utilized usefully in practice. Typical examples will be described based on the references as follows.
(1) JP-A 10-227436 "incineration processing method and apparatus therefor"
   Regarding this reference, system of processing soot and mist by water, for example, constitution of passing through a water film or constitution of rapid cooling utilizing the water injection, is disclosed. JP-A 10-227436 discloses constitution that water is jetted from a spray nozzle and an exhaust gas is cooled, and by the cooling, falling of the temperature within the exhaust gas or the secure incineration of the medical waste is intended.
(2) JP-A 9-60835 "fluidized bed incinerator"
   This reference relates to improvement of a secondary combustion chamber, and a plurality of guide plates are provided within the secondary combustion chamber so that an unburnt gas meanders nearly in the horizontal direction, and a secondary combustion air supply mechanism is provided so that a secondary burning air is supplied in the direction against the flow of the unburnt gas flowing along the guide plates. As a result, the unburnt gas makes a detour and the residence time is secured, and the complete combustion of the unburnt gas is intended.
(3) JP-A 7-198116 "incinerator"
   In this reference, a plurality of partition plates having gas passage holes are provided in a gas combustion chamber and are separated from each other with suitable intervals, and utilizing the partition plates, meandering, swirling, compression and diffusion of the burnt gas are repeated and the complete combustion of the burnt gas is intended.

In the reference (1), a burnt gas is cooled by water, and the temperature fall and the secure incineration of a medical waste are intended. In this constitution, however, if the contact with water is insufficient, dioxin may be produced, and if the rapid cooling by water can not be performed, the dioxin will be produced again. Also problems exist in that the contaminated water utilized in the water cooling may be diffused, and that the secondary contamination may be produced due to the post-treatment of the water, and the improvement is desired. Also this constitution seems insufficient to intend the secure incineration of the medical waste utilizing the cooling apparatus.

Also in the references (2), (3), the detour and the swirling of a burnt gas are utilized, and the complete combustion of the burnt gas is intended and generating of soot, a toxic gas or the like is prevented. Certainly when the residence time of the burnt gas in the gas combustion chamber is made sufficient and the contact with the air is made sufficient, the complete combustion can be intended. However, since the sufficient contact with the water and the secure rapid cooling can not be achieved, this constitution is not sufficient for the measure of the dioxin which becomes a problem in recent years.

Also in the apparatus for processing mist, the constitution is not sufficient for the secure dust collecting and capture and for the prevention of fume, dust, odor, germ or the like.

### SUMMARY OF THE INVENTION

At first, an apparatus for processing soot will be described. A burnt gas generated by combustion in a combustion chamber passes through a fire tube and is led into a casing of an apparatus for processing soot. The burnt gas led to the apparatus for processing soot is sucked by the suction of a blower from a gap (means a slit, a hole or the like. This applies also to hereinafter description.) provided on a disk baffle plate and an annular baffle plate. Then water introduced into the casing substantially at the same time (Otherwise, for example, water existing at the bottom can be sucked. In following description, introduction, suction or the like of water is not limited in principle.) is sucked by the suction force of the blower. Water diffused and sucked by the suction force, together with the burnt gas, swirls and flows in the vertical direction (vertical direction of the apparatus) and is spouted substantially in the jet state. However, the water together with the burnt gas, spouted in such manner, is checked by next disk baffle plate, and flows in swirling state along the next disk baffle plate in the horizontal direction (lateral direction of the apparatus). The water together with the burnt gas, is rapidly cooled in the flow process, and the sufficient contact with the water can be intended. The flowing seems to occur in the state that the water envelops the burnt gas or that the burnt gas is merged into particles of the water. The first soot processing is performed through the swivel motion and the swirling flow. After the first soot processing is performed, the burnt gas flows along next baffle plate by the suction force of the blower. Also the water flows down by the self weight and is moved toward the annular baffle plate or the disk baffle plate.

The burnt gas processed in such manner is subsequently sucked from a gap provided in the next disk baffle plate and the next annular baffle plate. For example, the burnt gas moves in swivel motion and flows in swirling state together with the water existing in the next disk baffle plate and the next annular baffle plate, and the soot processing is performed in similar manner to the first soot processing. In addition, in the initial stage of the start motion, the burnt gas together with the water is sucked from a gap provided in the next disk baffle plate and the next annular baffle plate. Of course, the suction is affected by the suction force by the blower and/or the water amount.

Subsequently the above-mentioned processing is repeated.

The swivel motion and the swirling flow of the water and the burnt gas are repeated, and finally, a sufficient space is secured between the final annular baffle plate and an induction plate, and the water particles do not get over the induction plate and stay within the casing. After soot, ash, dust, a foreign matter or the like is separated and removed, a clean air (gas) passes through an exhaust port of the casing and piping is led to a deodorizer.

A drip is formed on the induction plate so that water particles and refuse adhering to one surface of the induction plate are not transferred to other surface but fall at the drip. Also a chamber partitioned by the disk baffle plate and the annular baffle plate may be provided with pipes for introducing water individually. After the apparatus for processing soot is operated for a prescribed time, if the blower is stopped, the water and refuse stay on the bottom of the casing.

The processed air attaining to the deodorizer is subsequently discharged in the water of the deodorizer. After the refuse is removed again by the contact with the water or the diffusion into the water, the processed air becomes a bubble and rises and attains to a space part of the deodorizer. Since the space part is provided with a filter and a deodorizing agent or a deodorizing agent layer, refuse of small amount and an offensive smell included in the processed air are removed nearly completely. Water in the deodorizer or the apparatus for processing soot and mist is processed in a sedimentation separator and reutilized or scrapped.

The suction amount (introduction amount) of the burnt gas to the apparatus for processing soot is adjusted in that a damper, a shutter or the like provided at a fire tube is operated in automatic operation or manual operation, and operation of the apparatus for processing soot is intended within the capability of the apparatus and the excessive burning of a combustor is prevented.

Next, an apparatus for processing mist will be described. Paint mist (hereinafter referred to as "mist") generated in a painting chamber passes through a recovery machine, a recovery pipe or the like and is led into a casing of the apparatus for processing mist. The mist led to the apparatus for processing mist is sucked in the suction by the blower from a gap provided on the disk baffle plate and the annular baffle plate. Then substantially at the same time, water existing at the bottom of the casing is sucked (Otherwise, for example, introduction into the casing is possible.). The sucked water together with the mist swirls and flows in the vertical direction (vertical direction of the apparatus) and is spouted in substantially injection state. The water together with the mist, spouted in this manner is checked by next disk baffle plate and flows in swirling state along the next disk baffle plate in the horizontal direction (lateral direction of the apparatus). The water together with the mist is rapidly cooled during the flow process and sufficient contact with the water can be intended. The water together with the mist seems to flow in the state that the water envelops the mist or that the mist is merged into the water droplets. The first mist processing is performed through the swivel motion and the swirling flow. By the mist processing, the mist is liable to become spherical shape and can be easily recovered. After the first mist processing is performed, the clear air flows by the suction force of the blower along next disk baffle plate or the induction plate. Also the water flows down by its own weight, and is moved toward the annular baffle plate or the disk baffle plate.

The mist processing of one time is sufficient usually, and the cleared air passes between the final baffle plate and the induction plate and passes through the exhaust port of the casing and the piping and is led to the deodorizeer. If the blower is operated after it is operated for a prescribed time, the water and the spherical mist accumulate at the bottom surface of the casing. In the apparatus for processing mist, soot, dust, odor, various germs or the like can be securely collected and captured and fume, dust, odor, germ or the like can be prevented.

### BRIEF DESCRIPTION OF DRAWINGS

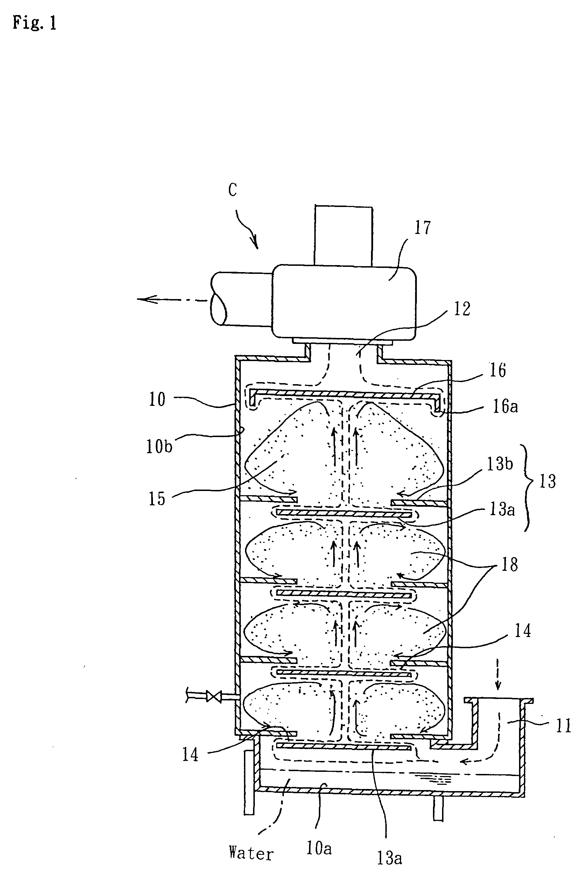

Fig. 1 is an enlarged sectional view of an apparatus for processing soot;

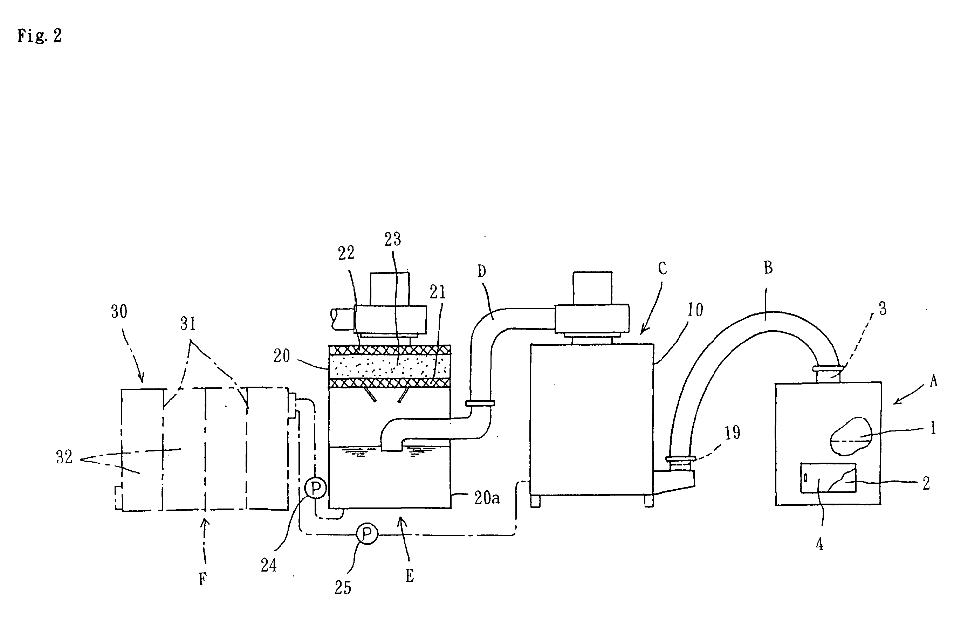

Fig. 2 is a schematic view of a system as a whole of processing soot and mist utilizing an apparatus for processing soot and mist;

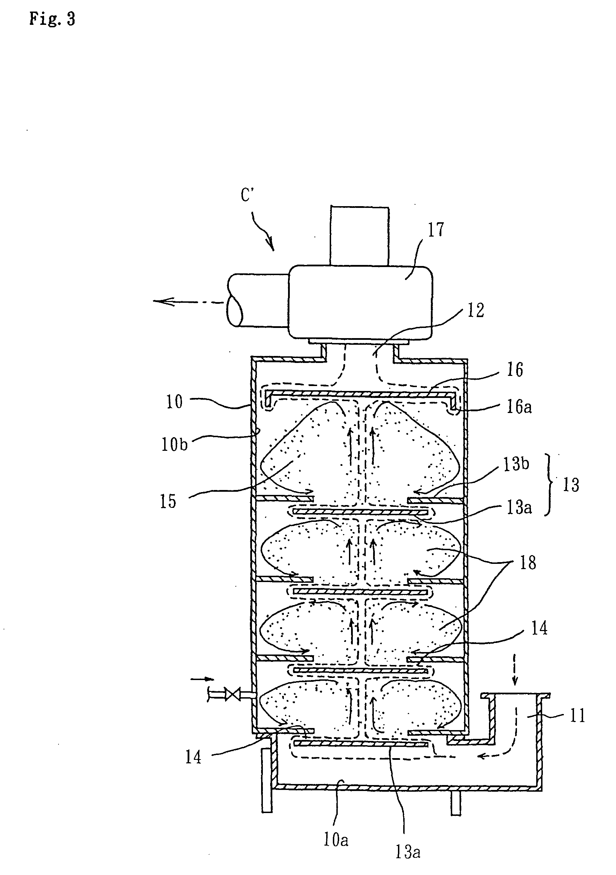

Fig. 3 is an enlarged sectional view of an apparatus for processing mist;
Fig. 4 is an enlarged sectional view of an apparatus for processing mist; and

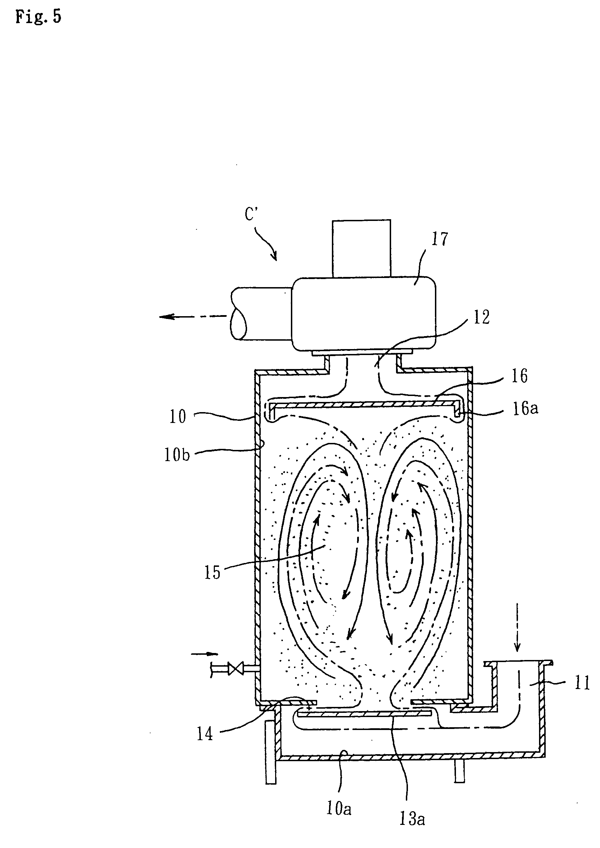

Fig. 5 is an enlarged sectional view of an apparatus for processing mist in another embodiment.

### DESCRIPTION OF PREFERRED EMBODIMENTS

An embodiment of the present invention will be described as follows. The present invention is constituted by main components comprising an incinerator A, a fire tube B provided on the incinerator A, an apparatus C for processing soot connected through the fire tube B, piping D provided on the apparatus C for processing soot, a deodorizer E connected through the piping D, and a sedimentation separator F provided if necessary. An example will be specifically described.

The incinerator A is provided with a combustion chamber 1, an inlet port 2 of air, an exhaust port 3 of a burnt gas, a door 4, or a roaster (not shown). This is usual style.

The apparatus C for processing soot comprises a casing 10 in nearly cylindrical shape, an inlet port 11 of water and a fuel gas, provided on upper and lower sides of the casing 10, an exhaust port 12 of a processed gas, several sets of baffle plates 13 provided within the casing 10 (each baffle plate 13 constituted by a disk baffle plate 13a provided to the casing 10 with spacing and an annular baffle plate 13b provided to the casing 10 as described later), a gap 14 provided on the baffle plate 13, a space 15 in large space formed on upper side of the baffle plate 13, an induction plate 16 provided on upper side of the space 15, and a blower 17 (including blower, other suction means and blowing means) connected to the exhaust port 12 of a processed gas. A burnt gas sucked from the gap 14, together with water existing at the bottom 10a of the casing 10, passes through the inlet port 11 and abuts on the initial disk baffle plate 13a and passes through the gap 14 formed by the disk baffle plate 13a and the annular baffle plate 13b and attains to the space 18. In the space 18, the burnt gas together with the water flows in swirling state and is rapidly cooled, and the sufficient contact with the water can be intended. The burnt gas together with the water flows in the state that the water envelops the burnt gas or that the burnt gas is merged into the water particles. After the flowing, the swivel motion and the flowing in swirling state are performed along next disk baffle plate 13a by the suction force of the blower 17. And then the operation as above described is repeated. and finally the burnt gas together with the water attains to the annular baffle plate 13b and the space 15 where the opening and the stirring can be intended. The water particles attaining to the space 15 flow down along the surface of the disk baffle plate 13a, but most of them rise again by the suction force of the blower 17 or rise again by contacting with the burnt gas and the water droplets rising. However, in any case, in the spaces 15, 18, the swivel motion and the flowing in swirling state are performed, and efficient contact, permeation and integration can be intended. The burnt gas rising passes through the space 15 and is radiated from the exhaust port 12 and the blower 17 to the atmosphere or is led through the piping D to the deodorizer E. The gap 14 is within range of about 10 mm to about 30 mm, and preferably about 12 mm to about 20 mm. The annular baffle plate 14b and the disk baffle plate 14a may be provided with unevenness, projection or the like. A drip 16a is provided on a peripheral part of the induction plate 16. In the drawings, numeral 19 designates a damper. The baffle plate 13 on the bottom 10a is a member for forming the gap 14.

An apparatus C' for processing mist is constituted in similar manner to that of the apparatus C for forming soot, but is different from the apparatus C in relation of mist and water. However, both are the same in the constitution, and the same numeral and the same name are used.

A deodorizer E comprises a casing 20 in substantially box-like shape, a bottom 20a to store water in the casing 20, two layers of filters 21, 22, and a deodorizing agent layer 23. Piping I) is opened to the water stored in the deodorizer E. Consequently the processed air exhausted from the piping D is jetted into the water and becomes bubbles, which rise on the water surface. Subsequently the deodorization is performed by the two layers of the filters 21, 22 and the deodorizing layer 23, thus an odorless gas or a cleared air is diffused into the atmosphere. In the drawings, numerals 24, 25 designate pumps. The deodorizer E may be provided with a blower.

A sedimentation separator F comprises a casing 30 in substantially box-like shape, partition plates 31 provided in the casing 31, and individual separation chamber 32 constituted by the partition plates 31, and the separation is performed by specific gravity. Otherwise, centrifugal separation, separation by a slant plate, processing by a chemical or the like can be adopted. The sedimentation separator F is connected to the spparatus C for processing soot, the apparatus C' for processing mist, the deodorizer E or the like. The sedimentation separator F is provided with an inlet port, an exhaust port or the like.

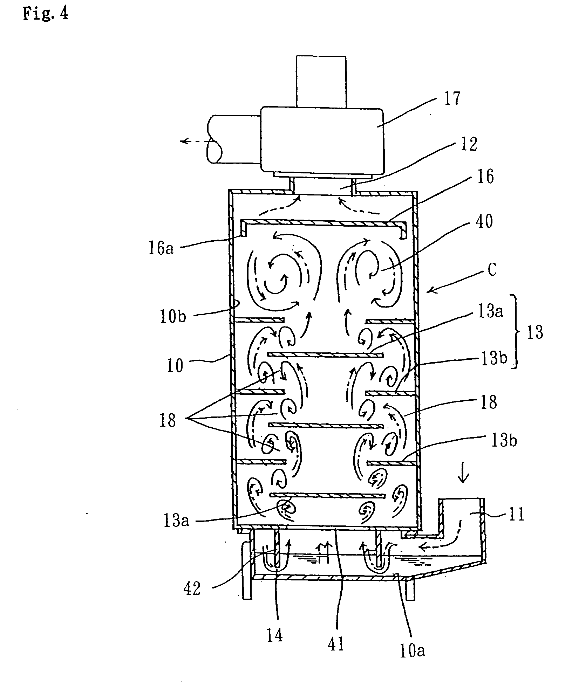

Fig. 4 shows a constitution example where a space 40 is provided between an annular baffle plate 13b and a disk baffle plate 13a. This example has structure mainly suitable for the mist processing. In Fig. 4, numeral 41 designates an opening, and numeral 42 designates a wall plate for constititing a gap 14.

Although not shown, as long as the gap 14 is formed in the constitution, sole constitution of the annular baffle plate 13b or the disk baffle plate 13a may be used. The casing 10 may be provided with a filter (not shown).

The invention in claim 1 is constituted by a casing having an inlet port of soot or mist and an exhaust port of a processed air, a baffle plate having a gap and arranged in the casing, an induction plate arranged at upper side of a space formed above the baffle plate, and a blower provided at the casing. Consequently soot or mist can be efficiently processed and refuse separated from soot or mist can be recovered in a mass, or generating of dioxin during processing of soot can be prevented and refuse generated during processing of mist can be captured and recovered.

The invention in claim 2 is constituted by a casing having an inlet port of soot or mist and an exhaust port of a processed air, a baffle plate having a gap and arranged in the casing, an induction plate arranged at upper side of a space formed above the baffle plate, and a blower provided at the casing. Several baffle plates are provided within the casing, and the residence time of soot or mist is secured. Conseequently the residence time of soot or mist is secured, and the soot or the mist can be efficiently processed and the separated refuse can be recovered in a mass, or generating of dioxin during the processing of soot can be prevented and refuse generated during the processing of mist can be captured and recovered.

In the invention in claim 3, soot or mist generated in an incinerator passes through a fire tube and is led to an apparatus for processing soot or mist, and then contact with water or a processed water flowing in swiring state within a casing of the apparatus for processing soot or mist is repeated, thereby soot, ash, dust, a foreign matter or the like in the soot or the mist is removed and the processed air passes through the piping and is led to a deodorizer for deodorization. Consequently generating of dioxin during processing of soot can be prevented and refuse generated during processing of mist can be captured and recovered securely utilizing a simple system.

## Claims

1. An apparatus for processing soot and mist, to be used in a system of processing soot and mist, said apparatus comprising:
a casing having an inlet port of soot or mist and an exhaust port of a processed air;
a baffle plate arranged in the casing;
a gap which is provided at the bottom of the casing and through which soot or mist is taken into the casing;
a space formed by the baffle plate and an induction plate provided below the exhaust port of the casing; and
a blower provided at the exhaust port of the casing so that water provided at the bottom of the casing swivels and flows.

2. An apparatus for processing soot and mist, to be used in a system of processing soot and mist, said apparatus comprising:
a casing having an inlet port of soot or mist and an exhaust port of a processed air;
a gap which is provided at the bottom of the casing and through which soot or mist is taken into the casing;
one or several baffle plates arranged in the casing;
a gap formed between the neighboring baffle plates;
a space formed by the baffle plate and an induction plate provided below the exhaust port of the casing; and
a blower provided at the exhaust port of the casing so that water provided at the bottom of the casing swivels and flows.

3. A system of processing soot and mist, using an apparatus for processing soot and mist, said system comprising:
an incinerator;
an apparatus for processing soot and mist with a blower, connected to the incinerator through a fire tube; and
a deodorizer,
wherein soot or mist led to the apparatus for processing soot and mist repeats contact with water or a processed water which swivels and flows within a casing of the apparatus for processing soot and mist,
soot, ash, dust, a foreign matter or the like, among the soot and the mist, is removed,
and
the processed air passes through the piping and is led to the deodorizer and then deodorized in the deodorizer.
